# FASCICULE DE BREVET EUROPEEN

(11) **EP 2 507 711 B1**
(45) Date de publication et mention de la délivrance du brevet: **22.01.2014**
(21) Numéro de dépôt: 10803604.7
(22) Date de dépôt: 24.11.2010
(51) Int. Cl.: G06F 13/28

(54) **CONTROLEUR D'ACCES DIRECT A UNE MEMOIRE POUR LE TRANSFERT DIRECT DE DONNEES ENTRE MEMOIRES DE PLUSIEURS DISPOSITIFS PERIPHERIQUES**
DIREKTSPEICHERZUGRIFFSTEUERUNG FÜR DIREKTE DATENÜBERTRAGUNG ZWISCHEN MEHREREN PERIPHERIEGERÄTESPEICHER
DIRECT MEMORY ACCESS CONTROLLER FOR THE DIRECT DATA TRANSFER BETWEEN THE MEMORIES OF A PLURALITY OF PERIPHERAL DEVICES

(30) Priorité: 01.12.2009 FR 0905776
(43) Date de publication de la demande: 10.10.2012
(73) Titulaire: Bull SAS, 78340 Les Clayes-sous-Bois (FR)
(72) Inventeur: COUVEE, Philippe, F-38190 Villard Bonnot (FR); FICET, Jean-Vincent, F-73110 La Chapelle Blanche (FR); KALEMKARIAN, Yann, F-38100 Grenoble (FR)
(74) Mandataire: Imbert de Tremiolles, Ghislain
(86) Numéro de dépôt international: PCT/FR2010/052500
(87) Numéro de publication internationale: WO 2011/070262

(56) Documents cités:
- EP-A2- 1 557 764
- WO-A1-2009/077341

## Description

La présente invention concerne le transfert de données entre au moins des zones de mémoires d'un système informatique et plus particulièrement un contrôleur d'accès direct à une mémoire permettant le transfert direct de données entre mémoires de plusieurs dispositifs périphériques ainsi qu'un procédé et un programme d'ordinateur permettant la mise en oeuvre d'un tel contrôleur.

Les systèmes informatiques modernes intègrent fréquemment des mécanismes d'accès direct à une mémoire centrale par des systèmes d'entrée/sortie aussi appelés dispositifs périphériques. Ces mécanismes sont communément appelés des contrôleurs de type DMA (sigle de *Direct Memory* Access en terminologie anglo-saxonne).

Selon ce mode de transmission de données, un dispositif périphérique telle qu'une carte réseau ou une interface de disque dur peut effectuer lui-même un transfert des données entre une mémoire interne à celui-ci et une mémoire centrale située à l'extérieur de celui-ci, sans l'intervention du ou des processeurs, ces derniers se limitant à transmettre une commande de lecture ou d'écriture comprenant une adresse de début de la zone mémoire à transférer et la longueur de cette zone. Le transfert de données peut être réalisé d'une mémoire interne vers une mémoire externe et inversement.

Les contrôleurs de type DMA- sont notamment utilisés dans les systèmes informatiques multitâches utilisant des dispositifs périphériques rapides afin de ne pas entraîner de blocage pendant les transferts de données. Ils se comportent comme des initiateurs de requêtes de lecture ou d'écriture pour transférer des données d'une mémoire interne d'un dispositif périphérique vers une mémoire centrale et inversement.

En outre, les contrôleurs de type DMA permettent de protéger la mémoire interne d'un dispositif périphérique en empêchant un accès direct à celle-ci.

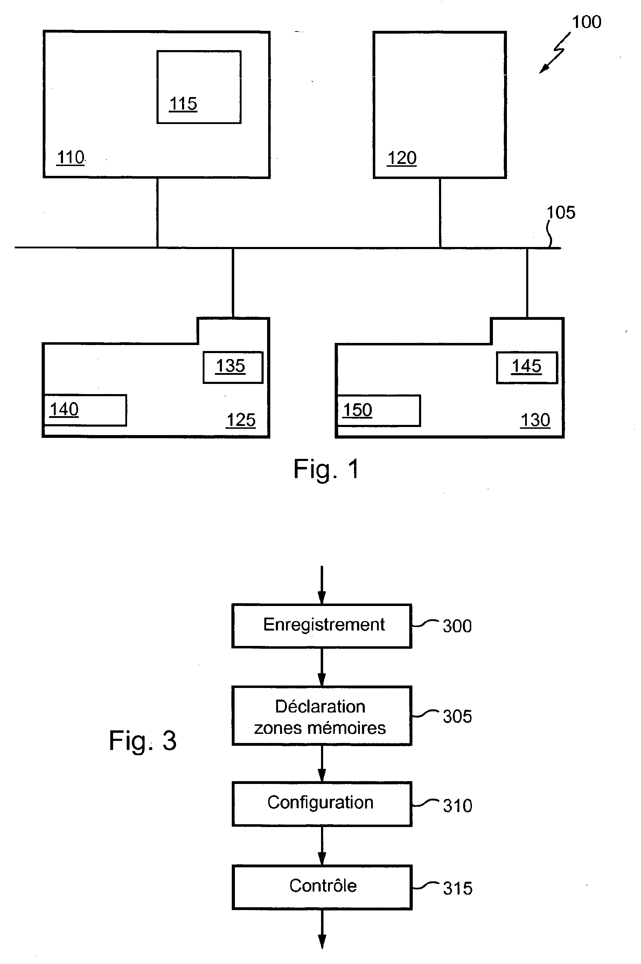

La figure 1 illustre schématiquement un système informatique comprenant deux dispositifs périphériques chacun équipé d'un contrôleur de type DMA.

Comme illustré, le système informatique 100 comprend un bus d'entrée/sortie 105 auquel sont reliées une carte mère 110 intégrant un ou plusieurs processeurs 115, une mémoire centrale 120 et des cartes réseau 125 et 130. Bien qu'illustré de façon simplifiée sur la figure 1, le système informatique 100 comprend non seulement les composants matériels représentés mais également des applications logicielles ainsi que des microprogrammes (appelés *firmwares* en terminologie anglo-saxonne) permettant la mise en oeuvre du système. La carte réseau 125 comprend un contrôleur de type DMA 135 permettant d'échanger des données entre la mémoire centrale 120 et l'interface réseau 140 via le bus 105. De même, la carte réseau 130 comprend un contrôleur de type DMA 145 permettant d'échanger des données entre la mémoire centrale 120 et l'interface 150 via le bus 105.

Ainsi, par exemple, lorsque l'interface réseau 140 reçoit des données depuis le réseau, le contrôleur de type DMA 135 initie une requête d'écriture dans la mémoire 120 pour y transférer les données reçues mémorisées localement dans une mémoire tampon (non représentée). De façon similaire, lorsque le contrôleur de type DMA 135 reçoit une requête de lecture d'un processeur 115 pour transmettre des données via le réseau, il initie une requête de lecture pour lire des données dans la mémoire 120 et les transférer à l'interface 140.

De même, le contrôleur de type DMA 145 permet d'échanger des données entre la mémoire 120 et un réseau auquel est reliée la carte 130.

Cependant, alors que les contrôleurs de type DMA ont prouvé leur efficacité dans de nombreuses architectures, il existe un besoin constant d'améliorer les performances des systèmes informatiques, en particulier des systèmes informatiques de type HPC (sigle d'*High-performance computing* en terminologie anglo-saxonne).

L'invention a ainsi pour objet, en particulier, d'améliorer les contrôleurs d'accès direct à une mémoire pour permettre le transfert direct de données entre mémoires de plusieurs dispositifs périphériques.

L'invention a ainsi pour objet un contrôleur d'accès direct à une mémoire pour un dispositif périphérique, appelé premier dispositif périphérique, ledit premier dispositif périphérique pouvant être connecté à au moins un autre dispositif périphérique, appelé second dispositif périphérique, via un bus de communication, ce contrôleur comprenant les moyens suivants,
- moyens pour initier au moins une commande d'accès direct à une zone d'une mémoire extérieure audit premier dispositif périphérique ;
- moyens pour recevoir au moins une commande d'accès direct à une zone d'une mémoire dudit premier dispositif périphérique, ladite commande étant reçue dudit au moins un second dispositif périphérique ; et,
- moyens pour transmettre ladite au moins une commande d'accès direct reçue à un composant dudit premier dispositif périphérique,
ledit contrôleur permettant à un contrôleur d'accès direct à une mémoire dudit au moins un second dispositif périphérique d'effectuer un transfert direct d'au moins une donnée vers ou depuis une mémoire dudit premier dispositif périphérique depuis ou vers ledit au moins un second dispositif périphérique.

Le contrôleur selon l'invention autorise ainsi des transferts directs de données entre des mémoires de dispositifs périphériques d'un système informatique qui permettent notamment de réduire la quantité de mémoire centrale utilisée dans le système informatique, de décharger le processeur central de certaines tâches de transfert de données et de réduire la latence due aux opérations de lecture/écriture.

De façon avantageuse, le contrôleur comprend en outre des moyens pour contrôler la validité de ladite au moins une commande d'accès direct reçue afin de protéger la mémoire de ce dispositif contre des accès non autorisés.

Selon un mode de réalisation particulier, lesdits moyens de contrôle comprennent des moyens pour comparer un identifiant de l'émetteur de ladite au moins une commande d'accès direct avec au moins un identifiant prédéterminé. Ainsi, seuls les dispositifs périphériques autorisés peuvent accéder directement à une mémoire d'un dispositif périphérique donné.

Toujours selon un mode de réalisation particulier, lesdits moyens de contrôle comprennent des moyens pour comparer ladite zone d'une mémoire dudit premier dispositif périphérique avec au moins une zone mémoire prédéterminée. Ainsi, il est possible de protéger des zones de mémoire d'un dispositif périphérique afin qu'aucun ou que seulement certains dispositifs périphériques puissent y accéder.

Le contrôleur comprend en outre, de préférence; des moyens pour identifier ledit au moins un second dispositif périphérique et des moyens pour transmettre une commande d'accès direct à une zone d'une mémoire dudit second dispositif lorsque la mémoire visée par la commande d'accès direct issue desdits moyens d'initiation appartient audit au moins un second dispositif périphérique. Le premier dispositif peut ainsi initier un accès direct à une mémoire dudit au moins un second dispositif.

L'invention a également pour objet un procédé de mise en oeuvre du contrôleur décrit précédemment, le procédé comprenant les étapes suivantes,
- enregistrement dudit premier dispositif périphérique de telle sorte que ledit premier dispositif périphérique puisse être identifié par un autre dispositif périphérique relié audit premier dispositif périphérique via ledit bus de communication ;
- réception d'au moins une commande d'accès direct à une zone d'une mémoire dudit premier dispositif périphérique, ladite commande étant reçue dudit au moins un second dispositif périphérique ; et,
- transmission de ladite au moins une commande d'accès direct reçue à un composant dudit premier dispositif périphérique,
pour permettre à un contrôleur d'accès direct à une mémoire dudit au moins un second dispositif périphérique d'effectuer un transfert direct d'au moins une donnée vers ou depuis une mémoire dudit premier dispositif périphérique depuis ou vers ledit au moins un second dispositif périphérique.

Ledit premier dispositif périphérique peut ainsi être identifié par ledit au moins un second dispositif périphérique qui peut alors initier un transfert direct de données entre une mémoire dudit premier dispositif périphérique et une mémoire dudit au moins un second dispositif périphérique.

De façon avantageuse, le procédé comprend en outre une étape de déclaration d'au moins une zone d'une mémoire dudit premier dispositif périphérique accessible par ledit au moins un second dispositif périphérique pour permettre à ce dernier d'initier un transfert direct vers ou depuis ladite au moins une zone.

Le procédé comprend en outre, de préférence, une étape de configuration dudit premier dispositif périphérique, ladite étape de configuration comprenant au moins la définition d'une règle d'accès à une zone d'une mémoire dudit premier dispositif périphérique afin notamment de protéger cette zone.

Toujours selon un mode de réalisation particulier, le procédé comprend en outre une étape de contrôle dudit premier dispositif périphérique, ladite étape de contrôle permettant à un utilisateur de modifier au moins un paramètre dudit premier dispositif périphérique pour contrôler un transfert direct d'au moins une donnée vers ou depuis une mémoire dudit premier dispositif périphérique depuis ou vers ledit au moins un second dispositif périphérique.

L'invention a également pour objet un programme d'ordinateur comprenant des instructions adaptées à la mise en oeuvre de chacune des étapes du procédé décrit précédemment lorsque ledit programme est exécuté sur un ordinateur. Les avantages procurés par ce programme d'ordinateur sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre schématiquement un système informatique comprenant deux dispositifs périphériques chacun équipé d'un contrôleur de type DMA ;
- la figure 2 illustre schématiquement certains éléments d'un système informatique dans lequel l'invention peut être mise en oeuvre ;
- la figure 3 illustre schématiquement des phases mises en oeuvre dans un contrôleur de type DMA d'un dispositif périphérique particulier pour permettre le transfert direct de données entre dispositifs périphériques ;
- la figure 4 illustre schématiquement certaines étapes mises en oeuvre dans un contrôleur de type DMA conforme à l'invention pour transférer directement des données entre plusieurs dispositifs périphériques ;
- la figure 5 illustre un système informatique adapté à mettre en oeuvre des transferts de données en mode multipoint ; et,
- la figure 6, comprenant les figures 6a à 6g, présente des exemples de transmissions directes de données entre plusieurs dispositifs périphériques, durant lesquelles des opérations peuvent être effectuées sur les données transférées.

De façon générale, l'invention vise à permettre la transmission directe de données entre des mémoires de dispositifs périphériques pourvus de contrôleurs de type DMA sans nécessiter d'étapes d'écriture suivie d'étapes de lecture dans une mémoire centrale. En d'autres termes, l'invention permet la mise en oeuvre d'un mécanisme de dialogue entre des contrôleurs de type DMA leur permettant d'effectuer des transactions pour lesquelles un contrôleur de type DMA est l'initiateur et au moins un autre contrôleur de type DMA se comporte comme une cible tout en effectuant la partie finale du transfert de données vers l'intérieur du dispositif périphérique considéré.

Ainsi, à titre d'illustration et en référence à la figure 1, des données reçues par l'interface réseau 140 de la carte réseau 125 peuvent être transférées directement dans l'interface 150 de la carte 130 sans utiliser la mémoire centrale 120.

Une communication directe entre plusieurs dispositifs périphériques présente notamment de nombreux avantages dans le cadre du calcul scientifique haute performance, en particulier entre cartes graphiques ou GPUs (sigle de *Graphics Processing Unit* en terminologie anglo-saxonne) et cartes Infiniband, entre cartes Infiniband et cartes Ethernet et entre cartes Infiniband.

En particulier, il est observé qu'un nombre croissant de centres de calcul utilisent des cartes graphiques afin d'effectuer des calculs qui étaient traditionnellement effectués par des unités de calcul des noeuds, la puissance supérieure des cartes graphiques permettant de diminuer l'empreinte au sol du système. Afin de paralléliser les calculs, un réseau d'interconnexion est nécessaire. En permettant un transfert direct des données du réseau vers des cartes graphiques et inversement, sans nécessiter de mémoire centrale, les noeuds mis en oeuvre requièrent moins de mémoire, ce qui permet de diminuer la consommation électrique tout en diminuant le coût global du calculateur. Il en va de même pour le transfert de données entre des réseaux internes et externes. En outre, le transfert direct de données permet de l'affranchir de problèmes d'accès mémoire non uniforme et de localisation fréquemment rencontrés.

La mise en oeuvre de l'invention est liée, en particulier, à l'architecture des bus de transferts utilisés entre les dispositifs périphériques et à l'architecture mémoire des différents dispositifs impliqués. Elle peut être réalisée au niveau du matériel ou au niveau du logiciel embarqué dans le dispositif, de préférence à l'aide d'un protocole prédéterminé permettant, avantageusement, de mettre en oeuvre les fonctions suivantes,
- l'identification d'un dispositif périphérique comprenant un contrôleur de type DMA capable d'initier un transfert direct de données entre contrôleurs de type DMA et se comporter comme une cible pour effectuer la partie finale d'un transfert de données ;
- la déclaration de zones de mémoire pouvant être utilisées pour transférer directement des données entre contrôleurs de type DMA, c'est-à-dire de zones de mémoire contrôlées par un contrôleur de type DMA et accessibles par d'autres contrôleurs de type DMA ;
- la définition de règles de transfert de données d'une mémoire d'un dispositif périphérique comprenant un contrôleur de type DMA capable de mettre en oeuvre l'invention à d'autres similaires, notamment de règles de transferts de données directs ou programmés ; et,
- le contrôle de dispositifs périphériques comprenant un contrôleur de type DMA capable de mettre en oeuvre l'invention pour permettre d'automatiser le transfert de données mémorisées dans une mémoire d'un tel dispositif à d'autres similaires.

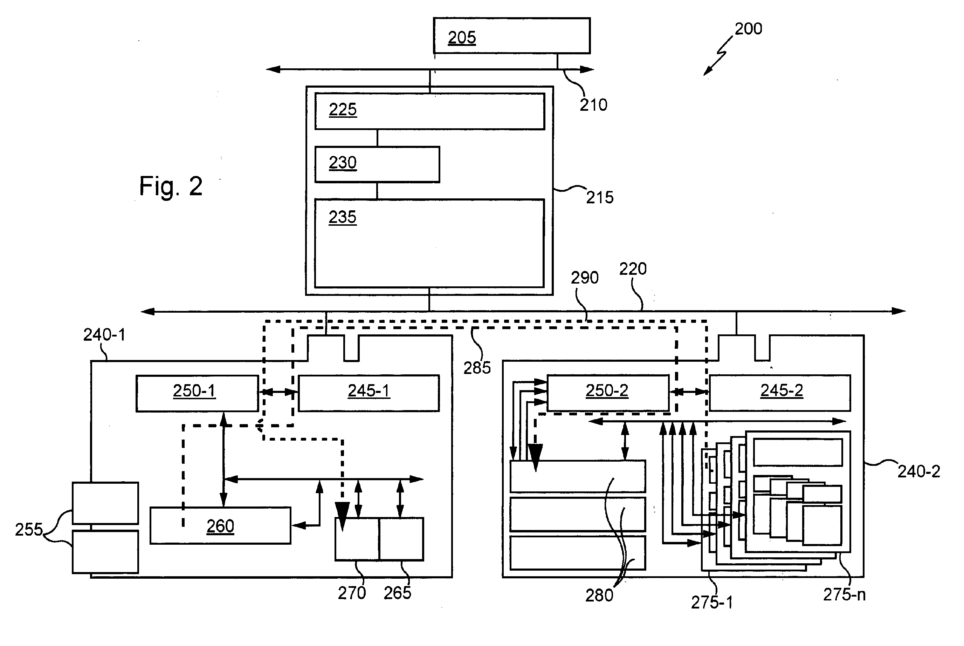

La figure 2 illustre schématiquement certains éléments d'un système informatique 200 dans lequel l'invention peut être mise en oeuvre. Le système comprend ici une mémoire centrale 205 reliée à un bus système 210 appelé *host CPU* bus auquel est également relié le contrôleur de bus 215. Ce dernier a notamment pour objet de convertir et transférer des informations du bus système 210 à un bus périphérique 220. A ces fins, le contrôleur de bus 215 comprend une interface 225 de bus système, une interface 230 de données et une interface 235 de bus périphérique.

Le système informatique 200 comprend en outre deux dispositifs périphériques 240-1 et 240-2 connectés au bus périphérique 220.

Le dispositif périphérique 240-1 est ici une carte réseau, par exemple une carte Ethernet. Il comprend une interface 245-1 de bus périphérique et une unité de traitement 250-1 associée pour traiter les paquets de données échangés via cette interface de bus périphérique. Il comprend en outre une interface réseau 255 et une unité de traitement 260 associée pour traiter les paquets de données échangés via cette interface réseau. Par ailleurs, le dispositif périphérique 240-1 comprend une unité de calcul 265 (ou CPU, sigle de *Central Processing Unit* en terminologie anglo-saxonne) et une mémoire locale 270, par exemple de type SRAM (acronyme de *Static Random Access Memory* en terminologie anglo-saxonne).

De façon similaire, le dispositif périphérique 240-2, ici une carte graphique, comprend une interface 245-2 de bus périphérique et une unité de traitement 250-2 associée pour traiter les paquets de données échangés via cette interface de bus périphérique. Ce dispositif comprend en outre une pluralité d'unités de calcul 275-1 à 275-n comprenant chacune une mémoire partagée, une mémoire locale et une unité élémentaire de calcul. Ce dispositif comprend également des mémoires 280 communes à toutes les unités de calcul, par exemple une mémoire globale et une mémoire de texture.

Les interfaces 245-1 et 245-2 intègrent un contrôleur de type DMA permettant des transferts directs de données entre la mémoire centrale 205 via le contrôleur de bus 215 et une mémoire interne des dispositifs périphériques 240-1 et 240-2 et inversement.

Ces contrôleurs de type DMA intègrent en outre des fonctions permettant de transférer directement des données entre des mémoires internes de ces dispositifs. A titre d'illustration, il est possible de transférer des données d'une mémoire tampon de l'unité de traitement 260 du dispositif 240-1 vers une mémoire 280 du dispositif 240-2 comme illustré par la flèche 285. De même, il est possible de transférer des données d'une mémoire partagée d'une unité de calcul 275-i du dispositif 240-2 vers la mémoire locale 270 du dispositif 240-1 comme illustré par la flèche 290.

A ces fins et comme décrit précédemment, les contrôleurs de type DMA comprennent ici des fonctions d'identification, de déclaration, de configuration et de contrôle.

La figure 3 illustre schématiquement un exemple d'enchaînement des phases mises en oeuvre dans un tel contrôleur de type DMA d'un dispositif périphérique particulier. Il est observé ici que les phases représentées sur la figure 3 ne sont pas nécessairement exécutées de façon séquentielle et qu'elles peuvent être exécutées dans un ordre différent de celui représenté. En particulier, la phase de contrôle peut suivre la phase d'enregistrement.

Une première phase (phase 300) a pour objet l'enregistrement du dispositif périphérique afin que celui-ci soit identifiable par les autres dispositifs qui lui sont directement reliés. Cet enregistrement peut, par exemple, être effectué auprès d'un annuaire commun. Cette phase peut notamment être automatiquement exécutée lorsque le dispositif est activé. La phase d'enregistrement comprend en outre, de préférence, une étape de description du dispositif afin, notamment, d'en définir le type. Il est observé ici que le type peut être défini de façon similaire au typage mis en oeuvre dans le standard PCI-E (sigle de *Peripheral Component Interconnect Express* en terminologie anglo-saxonne). Cette description peut également définir d'autres caractéristiques propres au dispositif périphérique, notamment les caractéristiques suivantes données à titre d'illustration,
- une capacité de mémoire interne du dispositif ;
- un crédit pour contrôler un flux de données afin d'éviter un trafic inutile (l'émission de chaque commande d'accès à une mémoire externe utilise une unité de crédit qui est à nouveau disponible lorsqu'un accusé réception est reçu en réponse à la commande) ;
- une indication de sécurité pour protéger l'accès aux données d'une mémoire interne du dispositif, en écriture et/ou en lecture, par exemple selon un mécanisme de clé de codage ;
- une indication de vérification d'intégrité pour préciser si les données échangées comprennent des données de vérification telles que des CRC (sigle de *Cyclic Redundancy Check* en terminologie anglo-saxonne) ;
- une vitesse de consommation des données mémorisées dans une mémoire interne du dispositif. Cette indication permet notamment de vérifier la compatibilité de deux dispositifs périphériques mettant en oeuvre des contrôleurs de type DMA mettant en oeuvre l'invention ; et,
- la liste des opérations supportées par le dispositif.

Cette phase peut également être utilisée pour identifier d'autres dispositifs périphériques reliés au même bus que le dispositif considéré, notamment des dispositifs comprenant un contrôleur de type DMA conforme à l'invention, afin d'établir la liste des dispositifs périphériques avec lesquels le dispositif considéré peut échanger directement des données.

Après s'être enregistré, le contrôleur DMA du dispositif peut initier une phase de déclaration de zones mémoires (phase 305). Une fonction mise en oeuvre dans cette phase vise notamment la déclaration des zones de mémoire interne du dispositif dans lesquelles d'autres dispositifs peuvent lire et/ou écrire des données, éventuellement sous certaines conditions. De façon avantageuse, une telle déclaration est effectuée auprès de l'annuaire commun utilisé pour identifier les dispositifs périphériques reliés à un même bus.

Durant cette phase, il est également possible de mettre en oeuvre des fonctions du contrôleur de type DMA pour rechercher dans un annuaire commun des plages mémoires préalablement déclarées par d'autres dispositifs périphériques. En outre, des outils permettant d'établir des correspondances entre des zones de mémoire interne du dispositif et des zones de mémoire interne d'autres dispositifs peuvent être mis en oeuvre pour établir des liens sources/destinations.

Dans une phase suivante (phase 310), le dispositif peut être configuré pour permettre le transfert direct de données vers ou depuis d'autres dispositifs périphériques, c'est-à-dire pour poser des règles de transfert de données. Durant cette phase, une étape d'évaluation est avantageusement mise en oeuvre dans une période de test pour évaluer la compatibilité, notamment en terme de services et de vitesse, du dispositif considéré avec d'autres dispositifs périphériques qui lui sont reliés.

Cette phase vise également à créer des primitives pour le transfert en mode point à point en spécifiant les dispositifs mis en oeuvre, les zones de mémoire concernées et les éventuels paramètres de transmission de données tels la sécurité et le contrôle d'intégrité. Il est observé ici que la création de primitives a pour objet la définition de commande de lecture et/ou d'écriture mais pas leur exécution qui est réalisée lorsque des conditions sont remplies par exemple lorsqu'une donnée est écrite en mémoire interne ou sur requête d'un utilisateur ou d'une application.

A titre d'illustration, une telle primitive peut viser, en référence au dispositif 240-2 de la figure 2, une commande d'écriture de données provenant d'une mémoire partagée d'une unité de calcul 275-i vers la mémoire locale 270 du dispositif 240-1 (flèche 290). Il peut également s'agir d'une commande de lecture de données d'une mémoire tampon de l'unité de traitement 260 du dispositif 240-1 vers une mémoire 280 (flèche 285).

A titre d'illustration, elles peuvent être représentées sous la forme suivante,
*lecture(source, destination, longueur, paramètres)*
où les indications de source et de destination comprennent les identifiants des dispositifs périphériques et des mémoires considérés ainsi que les zones mémoires visées, la longueur indique la quantité de données à transférer et les paramètres concernent les paramètres devant être utilisés liés, par exemple, à la sécurité, au contrôle des données et à l'exécution de la commande correspondant à la primitive.

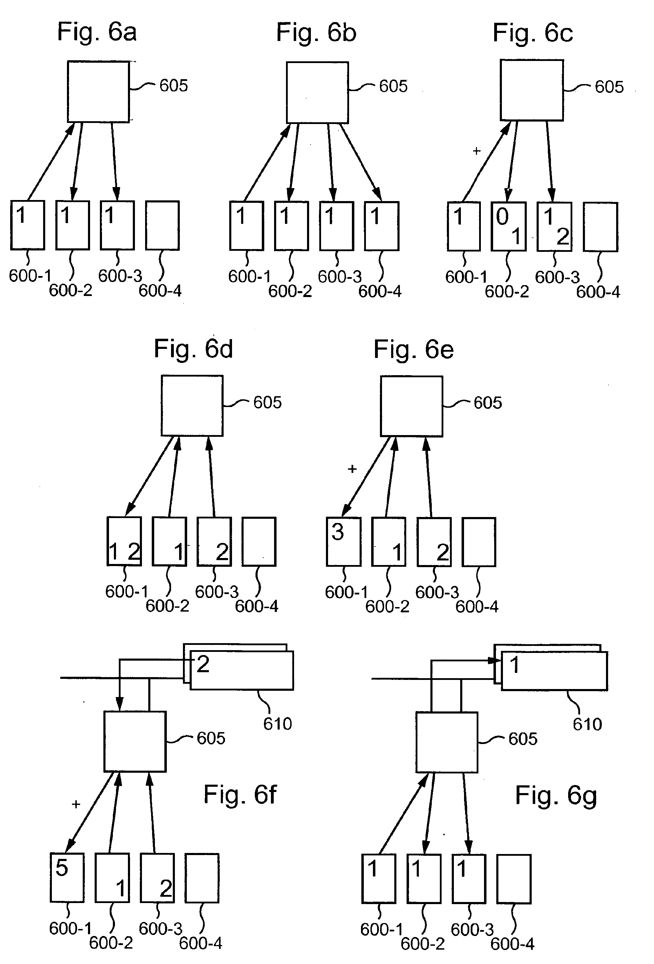

Des primitives peuvent également être créées pour la transmission de données dans un mode collectif de type multicast ou broadcast qui permet de transférer des données d'une source commune vers plusieurs dispositifs différents comme décrit ci-après, notamment en référence à la figure 6. Un tel mode de transfert est particulièrement utile lorsque des dispositifs sont dupliqués pour augmenter la fiabilité du système informatique.

Elles peuvent aussi comprendre des opérations de groupage ou de dégroupage de données provenant ou à destination de mémoires de plusieurs dispositifs périphériques permettant d'améliorer les performances du système informatique. De telles opérations peuvent être considérées comme des extensions des opérations connues sous le nom de *scatter* et *gather* en terminologie anglo-saxonne selon lesquelles des contrôleurs de type DMA sont capables de regrouper des données issues d'une mémoire pour faire un seul échange d'une quantité importante de données.

L'exécution des commandes correspondant à ces primitives peut être explicite (selon des commandes des utilisateurs ou du noyau du système d'exploitation), prédéterminée selon des événements (par exemple une donnée peut faire l'objet d'une commande d'écriture lors de sa réception en mémoire) ou périodique (les transferts sont planifiés, c'est-à-dire que le contenu de la mémoire est transféré, en totalité ou en partie, selon des cycles temporels déterminés).

Enfin, une phase de contrôle peut être mise en oeuvre (phase 315) pour permettre à un utilisateur d'accéder au dispositif périphérique. Cet accès est, de préférence, réalisé à travers une interface. Il permet ici d'obtenir la version et les capacités d'un dispositif ainsi que de le configurer. Il permet également de déclarer des zones d'une mémoire interne du dispositif accessibles à d'autres dispositifs et/ou de définir des règles sur de telles zones de mémoire pour indiquer, par exemple, qui peut accéder à ces zones avec quelles opérations et selon quels modes de transfert.

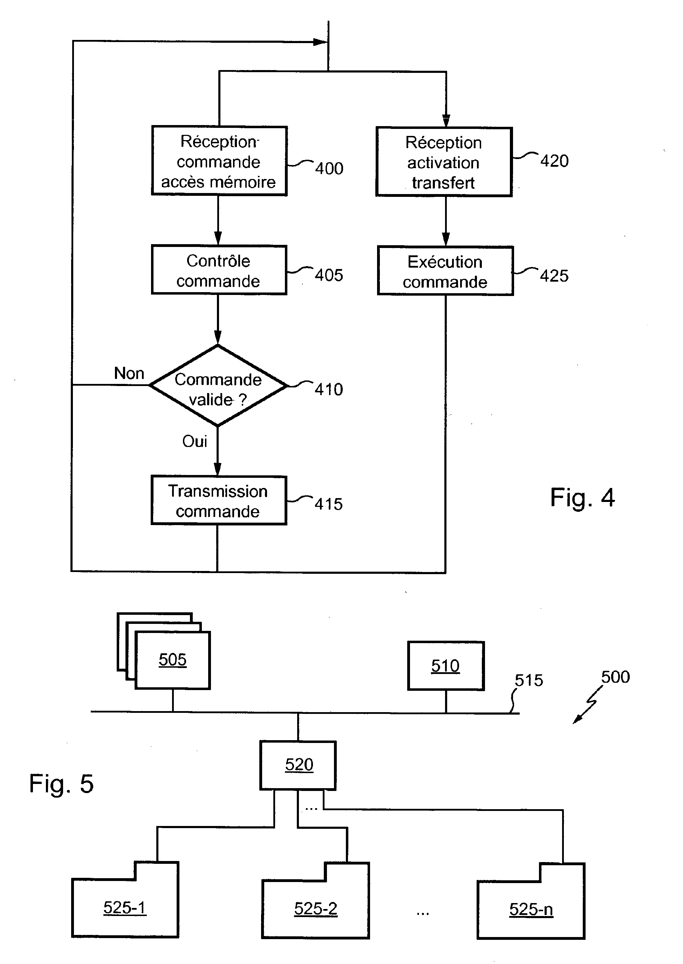

La figure 4 illustre schématiquement certaines étapes mises en oeuvre dans un contrôleur de type DMA conforme à l'invention pour transférer directement des données entre plusieurs dispositifs périphériques.

Après avoir reçu une commande d'accès à une mémoire interne du dispositif comprenant le contrôleur de type DMA (étape 400), par exemple une commande de lecture ou d'écriture, un contrôle de la commande reçue est, de préférence, effectué (étape 405). Un tel contrôle a notamment pour objet de protéger la mémoire interne du dispositif ayant reçu la commande. Comme indiqué précédemment, un tel contrôle peut notamment viser l'initiateur de la commande et la zone mémoire faisant l'objet de la commande. Un test est alors effectué (étape 410) pour déterminer si la commande est valide, c'est-à-dire ici si l'initiateur de la commande a le droit d'accéder à la mémoire interne du dispositif ayant reçu la commande et plus particulièrement à la zone de la mémoire spécifiée dans la commande.

Si la commande n'est pas valide, la commande est rejetée. Un message d'erreur peut alors être adressé à l'initiateur de la requête (non représenté). Si, au contraire, la commande est valide, elle est transmise à un autre composant du dispositif comprenant le contrôleur de type DMA ayant reçu la commande (étape 415), typiquement à un contrôleur de mémoire. La commande est alors exécutée de façon standard.

Parallèlement, lorsque le contrôleur de type DMA reçoit une notification d'activation de transfert de données (étape 420), il exécute la commande correspondante de façon standard. La notification d'activation de transfert de données peut être reçue d'un composant du dispositif comprenant le contrôleur DMA, par exemple d'une interface réseau, ou d'un élément externe, en particulier de processeurs du système central du système informatique. Il est observé que le transfert peut viser ici une commande de lecture ou d'écriture depuis ou vers la mémoire centrale du système informatique mais également depuis ou vers un ou plusieurs dispositifs périphériques qui mettent alors en oeuvre des étapes similaires aux étapes 400 à 415 décrites précédemment.

En d'autres termes, le contrôleur de type DMA a ici une double fonction de contrôleur de type DMA classique (étapes 420 et 425) et de pont permettant de transférer une commande d'un dispositif périphérique externe vers un composant interne du dispositif périphérique comprenant le contrôleur de type DMA qui simule ainsi un comportement d'un contrôleur de mémoire vis-à-vis du dispositif périphérique externe (étapes 400 à 415).

Comme indiqué précédemment, les contrôleurs de type DMA adaptés à mettre en oeuvre l'invention peuvent être utilisés pour des transferts collectifs, c'est-à-dire des transferts de données multipoints.

La figure 5 illustre un système informatique 500 adapté à mettre en oeuvre des transferts directs de données en mode multipoint. Le système informatique 500 comprend ici des processeurs 505 et une mémoire centrale 510 reliés par un bus système 515. Le système 500 comprend en outre un commutateur de bus 520 également relié au bus système 515 ainsi qu'une pluralité de dispositifs périphériques 525-1 à 525-n.

Le commutateur de bus 520 est, par exemple, un commutateur PCI-E qui est connecté aux dispositifs 525-1 à 525-n en mode point à point, indépendamment, selon un lien à double sens (appelé *full-duplex* en terminologie anglo-saxonne), en attribuant des largeurs de bus en fonction des échanges qui sont initiés par les contrôleurs DMA des dispositifs périphériques.

Il est observé ici que la norme PCI-SIG prévoit dans une spécification la possibilité de faire des échanges PCI-E de type multicast en implémentant un protocole adapté dans le contrôleur DMA d'un commutateur PCI-E pour permettre des transferts directs de données entre la mémoire centrale et des dispositifs périphériques groupés sous forme de groupe multicast (ou *multicast group* en terminologie anglo-saxonne).

Il existe par exemple des commutateurs PCI-E à 16 voies qui comprennent jusqu'à 4 contrôleurs de type DMA pour effectuer des transferts directs de données selon des descripteurs spécialement dédiés à l'échange multicast. Ces descripteurs indiquent une source commune pour chacun des contrôleurs de type multicast qui visent des cibles différentes, permettant ainsi de multiples échanges. Ces descripteurs peuvent également indiquer si des interruptions doivent être générées pour chaque contrôleur de type DMA ou seulement à la fin du transfert multicast.

De tels commutateurs peuvent être utilisés pour mettre en oeuvre l'invention comme décrit précédemment et permettre ainsi le transfert direct de données entre des dispositifs périphériques groupés sous forme de groupe multicast, chacun de ces dispositifs comprenant un contrôleur de type DMA mettant en oeuvre les fonctions décrites précédemment.

Ils permettent ainsi des échanges de données à partir de primitives de transferts collectifs, c'est-à-dire dans un dialogue à *(n+1)* participants.

Plusieurs opérations sont possibles entre dispositifs périphériques pourvus de contrôleurs de type DMA conformes aux spécifications décrites précédemment et entre dispositifs périphériques pourvus de contrôleurs de type DMA conformes aux spécifications décrites précédemment et la mémoire centrale.

Des exemples de telles opérations sont illustrés en référence à la figure 6, comprenant les figures 6a à 6g.

Les dispositifs périphériques représentés 600-1 à 600-4 comprennent chacun un contrôleur de type DMA conformes aux spécifications décrites précédemment. Chacun de ces dispositifs est ici relié à un commutateur 605 adapté à gérer les transferts collectifs (multicast et broadcast).

La figure 6a illustre une transmission de type multicast du dispositif 600-1 vers les dispositifs 600-2 et 600-3. La diffusion de données est ainsi réalisée à partir d'une source vers plusieurs cibles du groupe multicast auquel appartient le dispositif 600-1. Il s'agit d'une communication de type 1 vers *n* initiée par le dispositif comprenant la donnée transférée.

La figure 6b illustre une transmission de type broadcast du dispositif 600-1 vers les dispositifs 600-2, 600-3 et 600-4. La diffusion de données est ainsi réalisée à partir d'une source vers toutes les cibles du groupe multicast auquel appartient le dispositif 600-1. Il s'agit d'une communication de type 1 vers tous initiée par le dispositif comprenant la donnée transférée.

La figure 6c illustre une transmission de type multicast calculé du dispositif 600-1 vers les dispositifs 600-2, 600-3 et 600-4. La diffusion de données est ainsi réalisée à partir d'une source vers toutes les cibles du groupe multicast auquel appartient le dispositif 600-1. En outre, une opération est effectuée-sur les données transférées, par exemple une opération logique telle qu'un « ou », un « et » ou un « ou exclusif », une opération mathématique telle qu'une addition ou une multiplication ou une opération définie par le dispositif telle qu'un tri de données ou leur cryptage. L'opération effectuée ici est une addition entre la donnée transférée et une donnée présente dans le dispositif cible. La transmission est initiée par le dispositif comprenant la donnée transférée.

La figure 6d illustre une transmission de type agrégation de données des dispositifs 600-2 et 600-3 vers le dispositif 600-1. Il s'agit d'une opération permettant, à partir de plusieurs sources, de transmettre des données à une ou plusieurs cibles en agrégeant les données transmises. La transmission est initiée par le dispositif recevant les données transférées.

La figure 6e illustre une transmission de type agrégation calculée de données des dispositifs 600-2 et 600-3 vers le dispositif 600-1. Il s'agit d'une opération permettant, à partir de plusieurs sources, de transmettre des données à une cible en effectuant un calcul sur les données transmises. Il s'agit ici d'une addition entre les données reçues des sources utilisées. La transmission est initiée par le dispositif recevant les données transférées. Naturellement d'autres types d'opérations peuvent être mis en oeuvre.

La figure 6f illustre une transmission de type agrégation calculée de données des dispositifs 600-2 et 600-3 et de la mémoire centrale 610 vers le dispositif 600-1. Il s'agit d'une opération permettant, à partir de plusieurs sources, de transmettre des données à une cible en effectuant un calcul sur les données transmises. Il s'agit ici d'une addition entre les données reçues des sources utilisées. La transmission est initiée par le dispositif recevant les données transférées. D'autres types d'opérations peuvent également être mis en oeuvre.

La figure 6g illustre une transmission de type multicast du dispositif 600-1 vers les dispositifs 600-2 et 600-3 et la mémoire centrale 610. La diffusion de données est ainsi réalisée à partir d'une source vers plusieurs cibles du groupe multicast auquel appartient le dispositif 600-1. Il s'agit d'une communication de type 1 vers *n*. La transmission est initiée par le dispositif comprenant la donnée transférée.

Il est ainsi notamment possible d'effectuer les opérations suivantes lors de la transmission direct et collective de données,
- diffusion : des données issues d'une source sont transmises vers plusieurs ou tous les autres dispositifs périphériques appartenant à un même groupe et, éventuellement, vers la mémoire centrale ;
- diffusion avec opération : des données issues d'une source sont transmises vers plusieurs ou tous les autres dispositifs périphériques appartenant à un même groupe et, éventuellement, vers la mémoire centrale en effectuant des opérations sur ces données, notamment des opérations de type logique telles qu'un « ou », un « et » et un « ou exclusif », des opérations mathématiques telles que des additions et des multiplications et des opérations définies par le ou les dispositifs cibles telles qu'un tri des données ou leur cryptage ;
- agrégation : des données issues de plusieurs sources sont agrégées et transmises vers un, plusieurs ou tous les autres dispositifs périphériques appartenant à un même groupe et, éventuellement, vers la mémoire centrale ; et,
- agrégation avec opérations: des opérations sont effectuées sur des données issues de plusieurs sources, les résultats de ces opérations étant transmis vers un, plusieurs ou tous les autres dispositifs périphériques appartenant à un même groupe et, éventuellement, vers la mémoire centrale. De telles opérations sont notamment des opérations de type logique telles qu'un « ou », un « et » et un « ou exclusif », des opérations mathématiques telles que des additions et des multiplications et des opérations définies par le ou les dispositifs cibles telles qu'un tri des données ou leur cryptage.

Selon un mode de réalisation particulier, le choix de l'opération devant être effectuée dépend de certaines des données reçues en réponse à une commande de lecture de données.

Des transferts directs de données entre plusieurs dispositifs périphériques, ou transferts collectifs, peuvent être mis en oeuvre à l'aide de primitives de transferts collectifs déterminées dans au moins un des dispositifs périphériques.

Cette mise en oeuvre est similaire à celle décrite précédemment. Elle comprend des phases d'identification, de déclaration, de configuration et de contrôle. Les paramètres des primitives de transferts collectifs sont, de préférence, similaires à ceux des primitives utilisées pour effectuer un transfert direct de données entre des mémoires de deux dispositifs périphériques comme décrit précédemment. Cependant, ils comprennent en outre des caractéristiques propres liées notamment aux opérations de combinaison de données.

Un exemple d'une telle primitive de transfert collectif peut être représenté sous la forme suivante,
*lecture(source_1, destination_1, longueur_1,* ..., *source_n, destination_n, longueur_n, paramètres)*
où,
   - *source_i* et *destination_i* comprennent les identifiants des dispositifs périphériques et des mémoires considérés ainsi que les zones mémoires visées. Selon la nature de la primitive, toutes les sources ou toutes les destinations visent un même dispositif et des zones de mémoire identiques ou distinctes de telle sorte qu'une même donnée puisse être transférée vers plusieurs dispositifs et que des données provenant de différents dispositifs puissent être transférées dans différentes zones de mémoire d'un dispositif ou dans une même zone après qu'une opération ait été effectuée ;
   - *longueur_i* indique la quantité de données à transférer de la *source_i* à *destination_1* ; et,
   - *paramètres* précisent les paramètres devant être utilisés liés, par exemple, à la sécurité, au contrôle des données, aux opérations devant être effectuées et à l'exécution de la commande correspondant à la primitive.

Lorsque des opérations particulières doivent être effectuées sur des données transférées, elles sont effectuées par le dispositif ayant initié la commande lors de l'étape 425 illustrée sur la figure 4 ou par un dispositif ayant reçu la commande lors de l'étape 415 illustrée sur la figure 4 selon les informations de la primitive à l'origine de la commande d'accès direct.

Ainsi, par exemple, en référence à la figure 6e, après avoir initié une commande pour accéder à des données mémorisées dans les dispositifs 600-2 et 600-3, le dispositif 600-1 attend de recevoir les données transférées puis effectue l'opération précisée dans la primitive. L'étape 425 décrite précédemment comprend alors une étape pour initier la commande d'accès direct à la mémoire d'autres dispositifs, une étape de synchronisation pour obtenir les données attendues et une étape visant l'exécution des opérations précisées dans la primitive liée au transfert activé.

De façon similaire, en référence, par exemple, à la figure 6c, lorsqu'une commande d'accès direct est initiée selon une primitive indiquant l'exécution d'une opération dans un autre dispositif, distinct du dispositif à l'origine de cette commande, une indication relative aux opérations à effectuer est ajoutée à la commande d'accès direct transmise à cet autre dispositif. Lorsqu'une telle commande est reçue par un contrôleur de type DMA et qu'elle est valide, les opérations à effectuer sont identifiées par le DMA selon les indications reçues. Il initie alors leur exécution avant de transmettre la commande pour qu'elle soit exécutée au cours de l'étape 415.

Naturellement, pour satisfaire des besoins spécifiques, une personne compétente dans le domaine de l'invention pourra appliquer des modifications dans la description précédente.

## Revendications

1. Contrôleur d'accès direct à une mémoire pour un dispositif périphérique (240-1), appelé premier dispositif périphérique, ledit premier dispositif périphérique pouvant être connecté à au moins un autre dispositif périphérique (240-2), appelé second dispositif périphérique, via un bus de communication (220), ce contrôleur étant **caractérisé en ce qu'**il comprend les moyens suivants,
- moyens pour initier (425) au moins une commande d'accès direct à une zone d'une mémoire extérieure audit premier dispositif périphérique ;
- moyens pour recevoir (400) au moins une commande d'accès direct à une zone d'une mémoire dudit premier dispositif périphérique, ladite commande étant reçue dudit au moins un second dispositif périphérique ; et,
- moyens pour transmettre (415) ladite au moins une commande d'accès direct reçue à un composant dudit premier dispositif périphérique,
ledit contrôleur permettant à un contrôleur d'accès direct à une mémoire dudit au moins un second dispositif périphérique d'effectuer un transfert direct d'au moins une donnée vers ou depuis une mémoire dudit premier dispositif périphérique depuis ou vers ledit au moins un second dispositif périphérique.

2. Contrôleur selon la revendication précédente comprenant en outre des moyens pour contrôler (410) la validité de ladite au moins une commande d'accès direct reçue.

3. Contrôleur selon la revendication précédente selon lequel lesdits moyens de contrôle comprennent des moyens pour comparer un identifiant de l'émetteur de ladite au moins une commande d'accès direct avec au moins un identifiant prédéterminé.

4. Contrôleur selon la revendication 2 ou la revendication 3 selon lequel lesdits moyens de contrôle comprennent des moyens pour comparer ladite zone d'une mémoire dudit premier dispositif périphérique avec au moins une zone mémoire prédéterminée.

5. Contrôleur selon l'une quelconque des revendications précédentes comprenant en outre des moyens pour identifier ledit au moins un second dispositif périphérique et des moyens pour transmettre une commande d'accès direct à une zone d'une mémoire dudit second dispositif lorsque la mémoire visée par la commande d'accès direct issue desdits moyens d'initiation appartient audit au moins un second dispositif périphérique.

6. Procédé de mise en oeuvre du contrôleur selon l'une quelconque des revendications précédentes, le procédé étant **caractérisé en ce qu'**il comprend les étapes suivantes,
- enregistrement (300) dudit premier dispositif périphérique de telle sorte que ledit premier dispositif périphérique puisse être identifié par un autre dispositif périphérique relié audit premier dispositif périphérique via ledit bus de communication ;
- réception (400) d'au moins une commande d'accès direct à une zone d'une mémoire dudit premier dispositif périphérique, ladite commande étant reçue dudit au moins un second dispositif périphérique ; et,
- transmission (415) de ladite au moins une commande d'accès direct reçue à un composant dudit premier dispositif périphérique,
pour permettre à un contrôleur d'accès direct à une mémoire dudit au moins un second dispositif périphérique d'effectuer un transfert direct d'au moins une donnée vers ou depuis une mémoire dudit premier dispositif périphérique depuis ou vers ledit au moins un second dispositif périphérique.

7. Procédé selon la revendication précédente comprenant en outre une étape de déclaration (305) d'au moins une zone d'une mémoire dudit premier dispositif périphérique accessible par ledit au moins un second dispositif périphérique.

8. Procédé selon la revendication 6 ou la revendication 7 comprenant en outre une étape de configuration (310) dudit premier dispositif périphérique, ladite étape de configuration comprenant au moins la définition d'une règle d'accès à une zone d'une mémoire dudit premier dispositif périphérique.

9. Procédé selon l'une quelconque des revendications 6 à 8 comprenant en outre une étape de contrôle (315) dudit premier dispositif périphérique, ladite étape de contrôle permettant à un utilisateur de modifier au moins un paramètre dudit premier dispositif périphérique pour contrôler un transfert direct d'au moins une donnée vers ou depuis une mémoire dudit premier dispositif périphérique depuis ou vers ledit au moins un second dispositif périphérique.

10. Programme d'ordinateur comprenant des instructions adaptées à la mise en oeuvre de chacune des étapes du procédé selon l'une quelconque des revendications 6 à 9 lorsque ledit programme est exécuté sur un ordinateur.

## Patentansprüche

1. Direktspeicherzugriff-Controller für eine erste Peripherievorrichtung genannte Peripherievorrichtung (240-1), wobei die erste Peripherievorrichtung über einen Kommunikationsbus (220) mit mindestens einer weiteren, zweite Peripherievorrichtung genannten Peripherievorrichtung (240-2) verbunden werden kann, wobei dieser Controller **dadurch gekennzeichnet ist, dass** er folgende Mittel aufweist:
- Mittel (425) zum Auslösen mindestens eines Befehls für einen direkten Zugriff auf einen Bereich eines Speichers außerhalb der ersten Peripherievorrichtung;
- Mittel (400) zum Empfangen mindestens eines Befehls für einen direkten Zugriff auf einen Bereich eines Speichers der ersten Peripherievorrichtung, wobei der Befehl von der mindestens einen zweiten Peripherievorrichtung empfangen wird; und
- Mittel (415) zum Übertragen des mindestens einen empfangenen Direktzugriffsbefehls zu einer Komponente der ersten Peripherievorrichtung,
wobei der Controller es einem Direktspeicherzugriff-Controller der mindestens einen zweiten Peripherievorrichtung ermöglicht, eine direkte Übertragung mindestens eines Datenelements zu oder ausgehend von einem Speicher der ersten Peripherievorrichtung ausgehend von bzw. zu der mindestens einen zweiten Peripherievorrichtung durchzuführen.

2. Controller nach dem vorhergehenden Anspruch, der ferner Mittel (410) zum Prüfen der Gültigkeit des mindestens einen empfangenen Direktzugriffsbefehls aufweist.

3. Controller nach dem vorhergehenden Anspruch, gemäß dem die Prüfmittel Mittel zum Vergleichen einer Kennung des Senders des mindestens einen Direktzugriffsbefehls mit mindestens einer vorbestimmten Kennung umfassen.

4. Controller nach Anspruch 2 oder Anspruch 3, gemäß dem die Prüfmittel Mittel zum Vergleichen des Bereichs eines Speichers der ersten Peripherievorrichtung mit mindestens einem vorbestimmen Speicherbereich umfassen.

5. Controller nach einem der vorgehenden Ansprüche, der ferner Mittel zur Identifizierung der mindestens einen zweiten Peripherievorrichtung und Mittel zur Übertragung eines Befehls für einen direkten Zugriff auf einen Bereich eines Speichers der zweiten Vorrichtung aufweist, wenn der Speicher, auf den der von den Auslösemitteln ausgegebene Direktzugriffsbefehl abzielt, zu der mindestens einen zweiten Peripherievorrichtung gehört.

6. Verfahren zur Anwendung des Controllers nach einem der vorhergehenden Ansprüche, wobei das Verfahren **dadurch gekennzeichnet ist, dass** es folgende Schritte umfasst:
- Registrieren (300) der ersten Peripherievorrichtung, so dass die erste Peripherievorrichtung von einer weiteren Peripherievorrichtung, die über den Kommunikationsbus mit der ersten Peripherievorrichtung verbunden ist, identifiziert werden kann;
- Empfangen (400) mindestens eines Befehls für einen direkten Zugriff auf einen Bereich eines Speichers der ersten Peripherievorrichtung, wobei der Befehl von der mindestens einen zweiten Peripherievorrichtung empfangen wird; und
- Übertragen (415) des mindestens einen empfangenen Direktzugriffsbefehls zu einer Komponente der ersten Peripherievorrichtung,
um es einem Direktspeicherzugriff-Controller der mindestens einen zweiten Peripherievorrichtung zu ermöglichen, eine direkte Übertragung mindestens eines Datenelements zu oder ausgehend von einem Speicher der ersten Peripherievorrichtung ausgehend von bzw. zu der mindestens einen zweiten Peripherievorrichtung durchzuführen.

7. Verfahren nach dem vorhergehenden Anspruch, das ferner einen Schritt (305) zum Angeben mindestens eines Bereichs eines Speichers der ersten Peripherievorrichtung umfasst, der für die mindestens eine zweite Peripherievorrichtung zugänglich ist.

8. Verfahren nach Anspruch 6 oder Anspruch 7, das ferner einen Schritt (310) zum Konfigurieren der ersten Peripherievorrichtung umfasst, wobei der Konfigurationsschritt zumindest das Definieren einer Regel für einen Zugriff auf einen Bereich eines Speichers der ersten Peripherievorrichtung umfasst.

9. Verfahren nach einem der Ansprüche 6 bis 8, das ferner einen Schritt (315) zum Prüfen der ersten Peripherievorrichtung umfasst, wobei der Prüfschritt es einem Benutzer ermöglicht, mindestens einen Parameter der ersten Peripherievorrichtung zu modifizieren, um eine direkte Übertragung mindestens eines Datenelements zu oder ausgehend von einem Speicher der ersten Peripherievorrichtung ausgehend von bzw. zu der mindestens einen zweiten Peripherievorrichtung zu prüfen.

10. Computerprogramm, das Anweisungen umfasst, die zur Durchführung jedes der Schritte des Verfahrens nach einem der Ansprüche 6 bis 9 geeignet sind, wenn das Programm auf einem Computer ausgeführt wird.

## Claims

1. A controller for direct access to a memory for a peripheral device (240-1), referred to as first peripheral device, said first peripheral device being connectable to at least one other peripheral device (240-2), called second peripheral device, via a communication bus (220), this controller being **characterized in that** it comprises the following means,
- means (425) for initiating at least one command for direct access to an area of a memory external to said first peripheral device;
- means (400) for receiving at least one command for direct access to an area of a memory of said first peripheral device, said command being received from said at least one second peripheral device; and,
- means (415) for sending said at least one received command for direct access to a component of said first peripheral device,
said controller enabling a controller for direct access to a memory of said at least one second peripheral device to perform a direct transfer of at least one item of data to or from a memory of said first peripheral device from or to said at least one second peripheral device.

2. A controller according to the preceding claim further comprising means (410) for checking the validity of said at least one received command for direct access.

3. A controller according to the preceding claim wherein said checking means comprise means for comparing an identifier of the sender of said at least one command for direct access with at least one predetermined identifier.

4. A controller according to claim 2 or claim 3 wherein said checking means comprise means for comparing said area of a memory of said second peripheral device with at least one predetermined memory area.

5. A controller according to any one of the preceding claims further comprising means for identifying said at least one second peripheral device and means for sending a command for direct access to an area of a memory of said second device when the memory concerned by the command for direct access coming from said initiating means belongs to said at least one second peripheral device.

6. Method for implementing a controller according to any one of the preceding claims, the method being **characterized in that** it comprises the following steps,
- registering (300) said first peripheral device such that said first peripheral device can be identified by another peripheral device linked to said first peripheral device via said communication bus;
- receiving (400) at least one command for direct access to an area of a memory of said first peripheral device, said command being received from said at least one second peripheral device; and,
- sending (415) said at least one received command for direct access to a component of said first peripheral device,
to enable a controller for direct access to a memory of said at least one second peripheral device to perform a direct transfer of at least one item of data to or from a memory of said first peripheral device from or to said at least one second peripheral device.

7. A method according to the preceding claim further comprising a step (305) of declaring at least one area of a memory of said first peripheral device accessible by said at least one second peripheral device.

8. A method according to claim 6 or claim 7 further comprising a step (310) of configuring said first peripheral device, said configuring step comprising at least the definition of a rule for access to an area of a memory of said first peripheral device.

9. A method according to any one of claims 6 to 8 further comprising a step (315) of controlling said first peripheral device, said controlling step enabling a user to modify at least one parameter of said first peripheral device to control a direct transfer of at least one item of data to or from a memory of said first peripheral device from or to said at least one second peripheral device.

10. A computer program comprising instructions adapted for carrying out each of the steps of the method according to any one of claims 6 to 9 when said program is executed on a computer.
